# EUROPÄISCHE PATENTANMELDUNG

(11) **EP 1 277 507 A1**
(43) Veröffentlichungstag der Anmeldung: **22.01.2003**
(21) Anmeldenummer: 02015221.1
(22) Anmeldetag: 09.07.2002
(51) Int. Cl.: B01D 45/12, B04C 3/00

(54) **Zentrifugalkraft-Abscheider**

(30) Priorität: 13.07.2001 DE 10134051
(71) Anmelder: Pakufix Fertigungs- und Vertriebs GmbH, 92369 Sengenthal (DE)
(72) Erfinder: Zöllner, Thorsten, 92369 Buchberg-Sengenthal (DE)
(74) Vertreter: Hübner, Gerd, Dipl.-Phys.

(57) **Zusammenfassung**

Eine Filtervorrichtung zum Abscheiden von Flüssigkeiten, Feststoffen und/oder Gasen mit anderem spezifischen Gewicht aus einem Gasstrom (24) umfaßt ein im wesentlichen rohrförmiges Filter-Hauptteil (1) mit einem axialen Gas-Eintrittsanschluss (3) und tangential in das Filter-Hauptteil (1) mündenden Hilfsgasstrom-Eintrittsleitungen (5). Des weiteren weist die Filter-Vorrichtung ein in das Filter-Hauptteil (1) von der dem Gas-Eintrittsanschluss (3) abgewandten Seite her hineinragenden, zentralen Füllkörper (6) auf, der einen Gas-Austrittsanschluss (7) für das gereinigte Gas aufweist. Das Filter-Hauptteil (1) umfaßt mehrere, einzelne Ringabschnitte (8) mit von Abschnitt zu Abschnitt in Gas-Strömungsrichtung (4) ansteigenden Innen-Durchmessem unter Ausbildung von Stufen (11) zur Verhinderung von Rückströmungen.

## Beschreibung

Die Erfindung betrifft einen Zentrifugalkraft-Abscheider gemäß dem Oberbegriff von Anspruch 1.

Aus der DE 296 21 183 U1 ist ein derartiger Zentrifugalkraft-Abscheider bekannt. Das Filter-Hauptteil ist als ein in Strömungsrichtung sich konisch aufweitender Hohlraum gebildet, der sich von dem Gas-Eintrittsanschluss bis zu dem Gas-Austrittsanschluss erstreckt. In den konischen Hohlraum ragt ein ebenfalls konischer Füllkörper, wobei die Konizität des Hohlraums der Konizität des Füllkörpers entspricht. Der Ringraum zwischen Außenund Innenwand weist also eine konstante Ringbreite im Querschnitt auf. Des weiteren mündet tangential in den Hohlraum eine zu der Gasströmungs-Richtung senkrecht angeordnete Hilfsgasstrom-Eintrittsleitung für einen Hilfsgasstrom, der das zu reinigende Gas schraubenförmig im Filter-Hauptteil beschleunigt, wodurch Flüssigkeiten, Feststoffe und/oder Gase mit einem anderen spezifischen Gewicht zentrifugalkraftbedingt abgeschieden werden.

Nachteilig bei dieser Ausgestaltung ist allerdings, dass die Geschwindigkeit des Gasstroms in Strömungsrichtung rapide abnimmt, wodurch die Funktion der Filter-Vorrichtung beeinträchtigt wird. Dies ist vor allem auf den konstanten Abstand zwischen der Innen-Wand des Filter-Hauptteils und dem Füllkörper zurückzuführen. Da der Hohlraum und der Füllkörper konisch ausgebildet sind, entstehen in der Filter-Vorrichtung Rückströmungen, die die Geschwindigkeit des Gasstroms ebenfalls reduzieren. Ferner ist die Fertigung des Filter-Hauptteils mit erheblichen Problemen verbunden, da die gebohrten Hilfsgasstrom-Eintrittsleitungen entlang ihres Bohrwegs verlaufen. Aufgrund dessen münden die Hilfsgasstrom-Eintrittsleitungen nicht tangential in den Hohlraum, wodurch das zu reinigende Gas nicht in dem gewünschten Maße beschleunigt bzw. abgelenkt wird.

Hiervon ausgehend liegt der Erfindung die Aufgabe zugrunde, einen Zentrifugalkraft-Abscheider der gattungsgemäßen Art so auszugestalten, dass die Filter-Vorrichtung besonders einfach zu fertigen ist und eine erhöhte Abscheiderate im Vergleich zu dem bekannten Zentrifugalkraft-Abscheider aufweist.

Diese Aufgabe wird durch die im kennzeichnenden Teil des Anspruches 1 angegebenen Merkmale gelöst.

Der Kern der Erfindung besteht darin, dass das Filter-Hauptteil mehrere, einzelne Ringabschnitte, vorzugsweise Ring-Körper, mit in Gas-Strömungsrichtung ansteigenden Innen-Durchmessern unter Ausbildung von Stufen aufweist, wodurch Rückströmungen des Gases verhindert werden. Rückströmungen wirken sich bei Zentrifugalkraft-Abscheidern negativ aus, da sie die Strömungsgeschwindigkeit des Gasstroms herabsetzen. Diese Strömungsgeschwindigkeit ist allerdings entscheidend für das Abscheiden der Flüssigkeiten, Feststoffe und/oder Gase mit anderem spezifischen Gewicht aus dem Gasstrom.

Die Ausgestaltung nach Anspruch 3 ermöglicht Hilfsgasstrom-Eintrittsleitungen, die präzise zu fertigen sind und tangential in das Filter-Hauptteil münden. Vorzugsweise sind die Nuten stirnseitig in die Ring-Körper gefräst und somit einerseits rationell, andererseits sehr exakt tangential zu fertigen. Turbulenzen in dem zu reinigenden Gasstrom werden folglich verhindert.

Weitere vorteilhafte Ausgestaltungen geben die Unteransprüche an.

Nachfolgend wird die Erfindung anhand bevorzugter Ausführungsbeispiele in Verbindung mit der Zeichnung näher beschrieben. Dabei zeigen:
- Fig. 1: einen Längsschnitt durch eine erste Ausführungsform der erfindungsgemäßen Filter-Vorrichtung,
- Fig. 2: einen Längsschnitt durch eine zweite Ausführungsform der erfindungsgemäßen Filter-Vorrichtung,
- Fig. 3: eine Aufsicht auf einen ersten Ring-Körper in Axialrichtung,
- Fig. 4: einen Längsschnitt durch den in Fig. 3 gezeigten Ring-Körper,
- Fig. 5 und 6: weitere erfindungsgemäße Ring-Körper in Aufsicht analog Fig. 3,
- Fig. 7: einen Längsschnitt durch eine dritte Ausführungsform der erfindungsgemäßen Filter-Vorrichtung,
- Fig. 8: einen Längsschnitt durch eine weitere Ausführungsform eines Füllkörpers der erfindungsgemäßen Filter-Vorrichtung, und
- Fig. 9: einen Querschnitt durch den in Fig. 8 gezeigten Füllkörper.

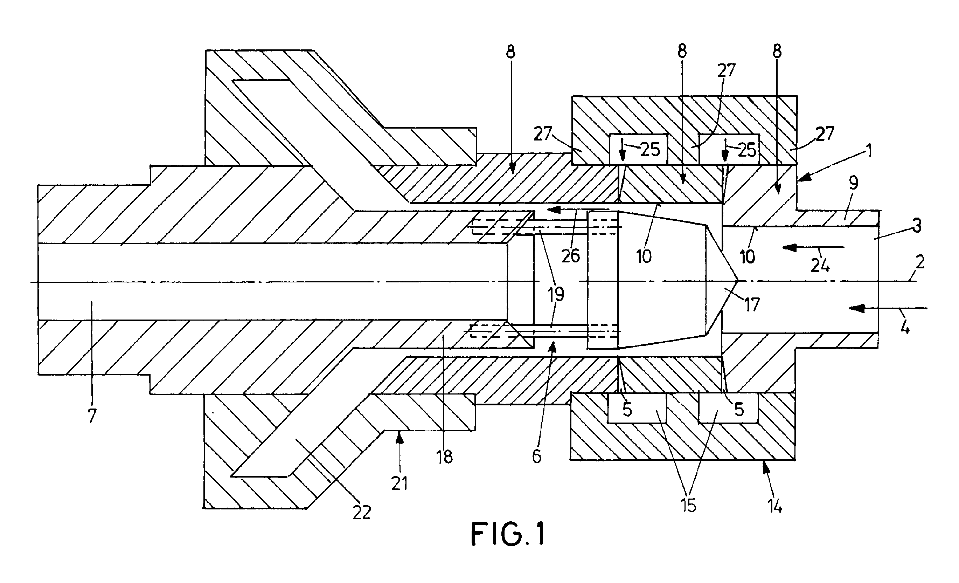

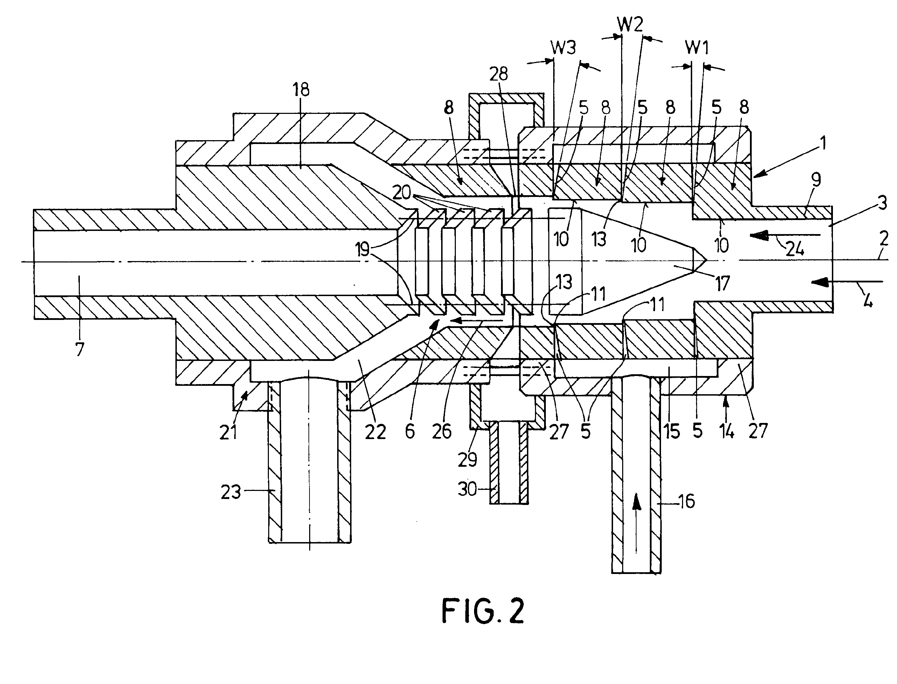

Die Filter-Vorrichtungen gemäß den Figuren 1 bzw. 2 umfassen ein im wesentlichen rohrförmiges Filter-Hauptteil 1, das eine Längsachse 2, einen axialen Gas-Eintrittsanschluss 3, eine Gas-Strömungsrichtung 4 und Hilfsgasstrom-Eintrittsleitungen 5 aufweist. Des weiteren umfaßt die Filter-Vorrichtung einen in das Filter-Hauptteil 1 von der dem Gas-Eintrittsanschluss 3 abgewandten Seite her hineinragenden, rotationssymmetrischen Füllkörper 6, der einen axialen Gas-Austrittsanschluss 7 aufweist.

Das Filter-Hauptteil 1 ist etwa mittig bezogen auf seine Länge aus einzelnen, zylindrischen Ring-Körpern 8 gebildet, wobei der erste in der Gas-Strömungsrichtung 4 angeordnete Ring-Körper 8 einen Hals-Abschnitt 9 aufweist, der den Gas-Eintrittsanschluss 3 bildet. Die Innen-Wände 10 der Ring-Körper 8 verlaufen im wesentlichen parallel zu der Längsachse 2, wobei eine leicht konische Ausgestaltung der Innen-Wände 10 der einzelnen Ring-Körper 8 mit abfallendem Innen-Durchmessern in Gas-Strömungsrichtung 4 ebenfalls möglich ist. Der Winkel zwischen Längsachse 2 und einer Innen-Wand 10 beträgt bei einer konischen Ausgestaltung weniger als 0,5°.

Zwischen dem ersten und dem zweiten Ring-Körper 8 liegt eine größere Durchmesserdifferenz vor, wobei die stromabwärts angeordneten Ring-Körper 8 nahezu identische Innen-Durchmesser aufweisen. Unter dem ersten Ring-Körper 8 wird der erste in der Gas-Strömungsrichtung 4 angeordnete Ring-Körper 8 verstanden. Der zweite Ring-Körper 8 ist folglich der zweite in der Gas-Strömungsrichtung 4 angeordnete Ring-Körper 8 und grenzt an den ersten Ring-Körper 8 an. Diese Numerierung wird auch für alle weiteren Ring-Körper 8 beibehalten.

Die von dem ersten Ring-Körper 8 stromabwärts gelegenen Ring-Körper 8 sind unter Bildung von Stufen 11 zusammengesetzt, wobei die Innen-Durchmesser von Ring zu Ring in Gas-Strömungsrichtung 4 ansteigen und die Durchmesserdifferenz an den Verbindungsstellen etwa 1 mm beträgt.

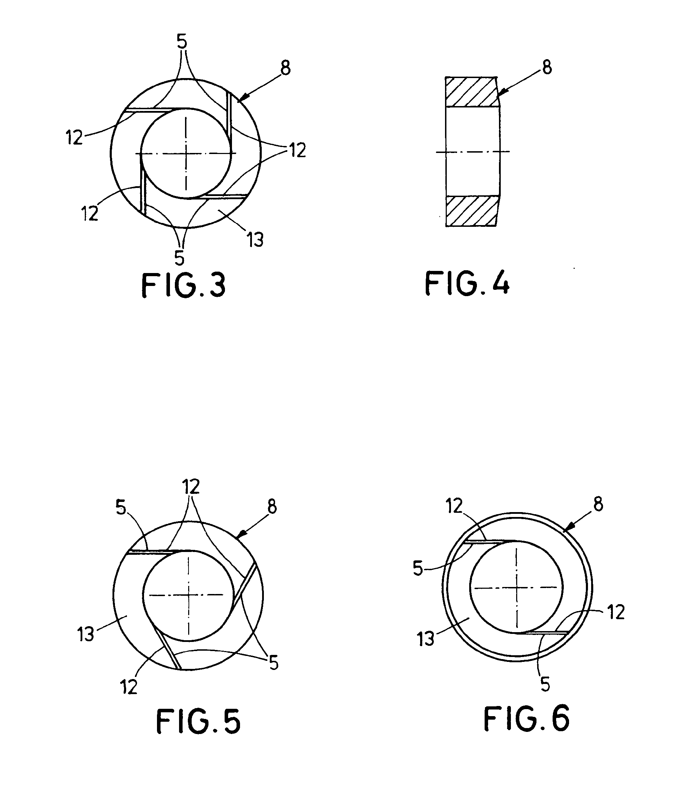

In der dem Gas-Eintrittsanschluss 3 abgewandten Stirnseite 13 der Ring-Körper 8 sind Nuten 12 vorgesehen, die die Hilfsgasstrom-Eintrittsleitungen 5 bilden. Die Hilfsgasstrom-Eintrittsleitungen 5 verlaufen zu der Längsachse 2 des Filter-Hauptteils 1 schräg, wobei die Schrägstellung in Gas-Strömungsrichtung 4 zunimmt. Die in dem ersten Ring-Körper 8 vorgesehenen Nuten 12 weisen einen Winkel W1 von 2 bis 5° auf. In dem zweiten Ring-Körper 8 reicht der Winkel W2 von 3 bis 6°, während die Nuten 12 im dritten Ring-Körper 8 einen Winkel von 5 bis 10° aufweisen. Eine Ausgestaltung der Ring-Körper 8 mit Nuten 12 auf beiden Stirnseiten ist ebenfalls möglich. Wie insbesondere aus den Figuren 3 bis 6 ersichtlich, münden die Hilfsgasstrom-Eintrittsleitungen 5 tangential in das Filter-Hauptteil 1. In der Stirnseite 13 des zweiten in Figur 3 gezeigten Ring-Körpers 8 sind vier Nuten 12 vorgesehen, die jeweils um 90° versetzt sind. In dem dritten in Figur 5 dargestellten Ring-Körper 8 sind drei um 120° versetzte Nuten 12 vorgesehen, während der vierte in Figur 6 dargestellte Ring-Körper 8 nur zwei um 180° versetzte Nuten 12 aufweist. Die Nuten 12 weisen jeweils eine Breite von 0,6 mm und eine Tiefe von 0,3 mm auf. Die Hilfsgasstrom-Eintrittsleitungen 5 sind im montierten Zustand der Filter-Vorrichtung zueinander versetzt. Die Ring-Körper 8 sind von einer Verteiler-Hülse 14 umgeben, die lediglich mit endseitigen, abdichtenden Anlageringen 27 an der Außenwand der Ring-Körper 8 anliegt, wodurch ein Ring-Kanal 15 zwischen den Ring-Körpern 8 und der Verteiler-Hülse 14 gebildet ist. Die Verteiler-Hülse 14 weist ferner eine Hilfsgas-Zuführleitung 16 auf. In Figur 1 weist die Verteiler-Hülse 14 zusätzlich einen mittleren Anlagering 27 auf.

Der in das Filter-Hauptteil 1 ragende Füllkörper 6 umfaßt einen kegelförmigen Kopfabschnitt 17 und einen rohrförmigen Rumpf-Abschnitt 18, der den Gas-Austrittsanschluss 7 umfaßt. Der Kopfabschnitt 17 ist in einer Ausführungsform, wie aus Figur 1 ersichtlich, von dem Rumpf-Abschnitt 18 durch Halte-Stifte 19 beabstandet angeordnet. Der Kopfabschnitt 17 und der Rumpf-Abschnitt 18 weisen eine gemeinsame Längsachse auf, die koaxial zu der Längsachse 2 verläuft.

In der in Figur 2 dargestellten Ausführungsform sind zwischen dem Kopfabschnitt 17 und dem Rumpf-Abschnitt 18 hülsenartige Leitlamellen 20 vorgesehen, deren Innenfläche in Gas-Strömungsrichtung 4 sich konusförmig verjüngt. Die Leitlamellen 20 sind durch Haltestifte 19 fixiert, die auch den Kopfabschnitt 17 mit dem Rumpf-Abschnitt 18 verbinden. Der Innen-Durchmesser des Rumpf-Abschnitts 18 ist konstant, während sein AußenDurchmesser in Gas-Strömungsrichtung 4 zunimmt.

Des weiteren weist die in Figur 2 dargestellte Ausführungsform der Filter-Vorrichtung einen Gas-Schälspalt 28 in dem Filter-Hauptteil 1 auf. Der Gas-Schälspalt 28 befindet sich zwischen dem vierten und fünften Ring-Körper 8, d. h. er ist stromabwärts des Kopfabschnitts 17 vorgesehen. Die Spaltweite des Gas-Schälspalts 28 ist mechanisch veränderbar und nimmt von der Innen-Wand 10 aus gesehen in radialer Richtung zu. Der Gas-Schälspalt 28 ist außen durch eine mit einer Gas-Abführleitung 30 versehene Sammel-Hülse 29 abgeschlossen.

Die Filter-Vorrichtung ist durch eine Verschluss-Hülse 21 abgeschlossen, welche den letzten Ring-Körper 8 umgreift und unter Bildung eines zweiten Innenraums 22 zwischen dem Rumpf-Abschnitt 18 und der Verschluss-Hülse 21 an dem Rumpf-Abschnitt 18 anliegt. Die Verschluss-Hülse 21 dichtet die Filter-Vorrichtung ab und weist eine Gas-Abführleitung 23 auf.

Bei der in Figur 2 dargestellten Ausführungsform liegt die Sammel-Hülse 29 an der Verteiler-Hülse 14 und an der Verschluss-Hülse 21 an und dichtet somit die Filter-Vorrichtung ab. Bei dieser Ausführungsform sind die Verteiler-Hülse 14 und die Verschluss-Hülse 21 miteinander verschraubt.

Ein zu reinigender Gasstrom 24 tritt durch den Gas-Eintrittsanschluss 3 in das Filter-Hauptteil 1 ein und wird durch den senkrecht zu dem Gasstrom 24 einströmenden Hilfsgasstrom 25 abgelenkt und beschleunigt, sodass der aus dem zu reinigenden Gasstrom 24 und dem Hilfsgasstrom 25 bestehende Gesamt-Gasstrom 26 sich mit hoher Geschwindigkeit entlang der Innen-Wände 10 der Ring-Körper 8 auf einer schraubenförmigen Bahn bewegt. Der Hilfsgasstrom 25 wird über die Hilfsgas-Zuführleitung 16 in die Verteiler-Hülse 14 geleitet, und strömt dann durch die Hilfsgasstrom-Eintrittsleitungen 5 in das Filter-Hauptteil 1. Aufgrund des zwischen den Innen-Wänden 10 der Ring-Körper 8 und dem Kopfabschnitt 17 abnehmenden Abstandes wird der Gasstrom 26 zusätzlich beschleunigt. Eine hohe Rotations-Strömungsgeschwindigkeit ist für ein Abscheiden von Flüssigkeiten, Feststoffen und/oder Gasen mit anderem spezifischen Gewicht aus dem Gasstrom 26 entscheidend. Aufgrund dessen sind die Innen-Wände 10 und die Oberfläche des Füllkörpers 6 auch elektropoliert, wodurch besonders geringe Oberflächenrauhigkeiten erzielt werden. Zu dem gleichen Zweck können diese Oberflächen auch mit einer porenlosen, abriebfesten Gleitschicht versehen oder in polierter Keramik ausgeführt sein. Die einzelnen Stufen 11 verhindern Rückströmungen. Wegen den schräg verlaufenden Hilfsgasstrom-Eintrittsleitungen 5 werden der Gasstrom 24 zusätzlich beschleunigt und Rückströmungen ebenfalls verhindert. Durch die in der Gas-Strömungsrichtung 4 zunehmende Schrägstellung der Hilfsgasstrom-Eintrittsleitungen 5 wird der Gasstrom 24 in Stufen zunehmend beschleunigt. Aufgrund der hohen Strömungsgeschwindigkeit des Gesamt-Gasstroms 26 in Rotationsrichtung scheiden sich Flüssigkeiten, Feststoffe und/oder Gase mit anderem spezifischen Gewicht aus dem Gasstrom 26 ab und strömen an den Innen-Wänden 10 der Ring-Körper 8 entlang. Sie verlassen die Filter-Vorrichtung durch die Gas-Abführleitung 23. Das gereinigte Gas, das im Vergleich zu dem mit Flüssigkeiten, Feststoffen und/oder Gasen versehenen Gasstrom 26 ein geringeres spezifisches Gewicht aufweist, strömt an dem Füllkörper 6 entlang und wird durch die Leitlamellen 20 in den Gas-Austrittsanschluss 7 geleitet. In dem Gas-Austrittsanschluss 7 liegt ein Unterdruck vor, sodass das gereinigte Gas auch ohne Leitlamellen 20 in den Gas-Austrittsanschluss 7 gesaugt wird.

Der in Figur 2 dargestellte Gas-Schälspalt 28 bewirkt im Vergleich zu der in Figur 1 dargestellten Ausführungsform ein vorzeitiges Abführen der aus dem Gasstrom 26 abgeschiedenen und an den Innen-Wänden 10 der Ring-Körper 8 entlang strömenden Flüssigkeiten, Feststoffe und/oder Gase mit anderem spezifischen Gewicht. Sie verlassen die Filter-Vorrichtung durch die Gas-Abführleitung 30, wodurch ein Zusetzen der Filter-Vorrichtung stromabwärts des Gas-Schälspalts 28 vermieden wird. Durch die Einstellmöglichkeit der Spaltweite des Gas-Schälspalts 28 ist das gewünschte Maß des Abschälens der Flüssigkeiten, Feststoffe und/oder Gase mit anderem spezifischen Gewicht aus dem Gasstrom 26 einstellbar.

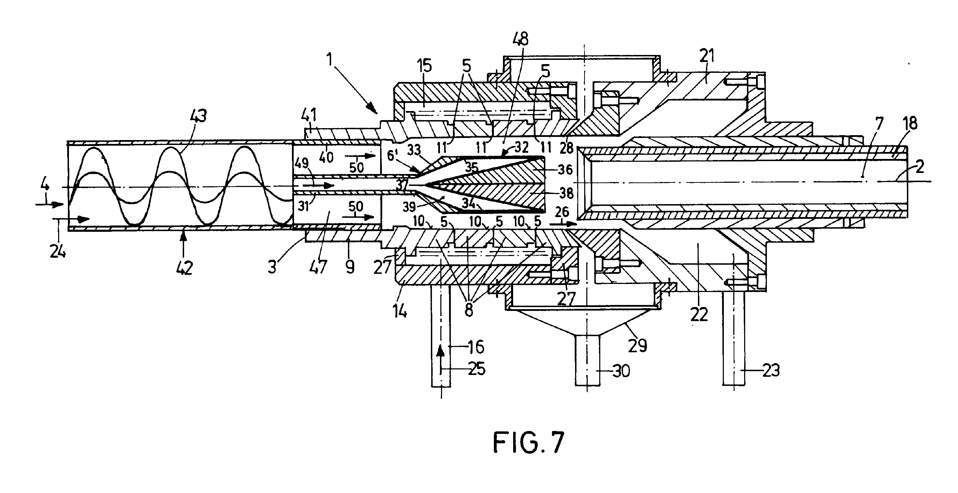

Im folgenden wird unter Bezugnahme auf Figur 7 eine dritte Ausführungsform der Erfindung beschrieben. Identische Teile erhalten dieselben Bezugszeichen wie bei dem ersten und zweiten Ausführungsbeispiel, auf deren Beschreibung hiermit verwiesen wird. Konstruktiv unterschiedliche, jedoch funktionell gleichartige Teile erhalten dieselben Bezugszeichen mit einem hochgesetzten Strich.

Die Filtervorrichtung gemäß dem dritten Ausführungsbeispiel unterscheidet sich von den beiden vorherigen Filtervorrichtungen durch die Ausgestaltung des Füllkörpers 6'. Der rotationssymmetrische Füllkörper 6' ist innerhalb des Filter-Hauptteils 1 angeordnet. Er umfasst eine vordere, rohrförmige Gas-Einführleitung 31 und einen Gas-Austrittsabschnitt 32, der stromabwärts der Gas-Einführleitung 31 angeordnet ist.

Zwischen der Gas-Einführleitung 31 und der benachbart verlaufenden Innen-Wand 10 des Filter-Hauptteils 1 liegt ein Ring-Kanal 47 vor. Die Gas-Einführleitung 31 weist an der dem Gas-Austrittsabschnitt 32 zugewandten Seite einen sich in Gas-Strömungsrichtung 4 stetig erweiternden Diffusor-Abschnitt 33 auf.

Der Gas-Austrittsabschnitt 32 ist radial durch eine perforierte Blechhülse 34 begrenzt, die mit dem freien, kreisringförmigen Endbereich 35 des Diffusor-Abschnitts 33 verbunden ist. Zwischen der Blechhülse 34 und der benachbart verlaufenden Innen-Wand 10 des Filter-Hauptteils 1 erstreckt sich ein im Querschnitt ringförmiger Strömungskanal 48. Die Querschnittsfläche des Strömungskanals 48 ist wesentlich kleiner als die Querschnittsfläche des Ring-Kanals 47. Axial ist der Gas-Austrittsabschnitt 32 durch einen konusförmig ausgebildeten Gas-Verdrängungskörper 36 begrenzt, der sich über die gesamte Länge des Gas-Austrittsabschnitts 32 erstreckt. Die Konus-Spitze 37 des Gas-Verdrängungskörpers 36 ragt in die Öffnung des Diffusor-Abschnitts 33. Die Blechhülse 34 ist mit dem Fußabschnitt 38 des Gas-Verdrängungskörpers 36 verbunden. Zwischen der Blechhülse 34 und dem Gas-Verdrängungskörper 36 liegt ein Strömungskanal 39 vor.

Die Blechhülse 34 wird von zahlreichen Gas-Austritts-Kanälen (nicht in Fig. 7 dargestellt) durchdrungen, die sich jeweils entlang eines kurzen Abschnitts einer gedachten Schraubenlinie in der Blechhülse 34 erstrecken. Auf die Ausgestaltung der Gas-Austritts-Kanäle wird nachfolgend noch näher eingegangen.

In den Hals-Abschnitt 9 des ersten Ring-Körpers 8 ist eine Buchse 40 eingesetzt, deren aus dem Filter-Hauptteil 1 ragender Endabschnitt 41 mit einem Schnecken-Rohr 42 gasdicht verbunden ist. Innerhalb des Schnecken-Rohrs 42 ist eine Gas-Führungs-Schnecke 43 angeordnet. Die Gas-Einführleitung 31 verläuft von dem Gas-Austrittsabschnitt 32 bis zu dem Schnecken-Rohr 42.

Ein zu reinigender Gasstrom 24 wird durch das Schnecken-Rohr 42 zu dem Filter-Hauptteil 1 geführt. In dem Schnecken-Rohr 42 wird der Gasstrom 24 auf einer schraubenförmigen Bahn bewegt und somit in Drall versetzt. Der Kernstrom 49 des in Drall versetzten Gasstroms 24 wird durch die Gas-Einführleitung 31 in den Gas-Austrittsabschnitt 32 geführt, während der Mantelstrom 50 des Gasstroms 24 in den Ring-Kanal 47 eintritt und in den Strömungskanal 48 strömt. Der Mantelstrom 50 weist bereits beim Eintritt in den Strömungskanal 48 eine Rotations-Geschwindigkeit auf. Durch die in der Blechhülse 34 ausgebildeten Gas-Austritts-Kanäle strömt der Kernstrom 49 in den Strömungskanal 48, in welchem dieser mit dem Mantelstrom 50 vermischt wird. Die Gas-Austritts-Kanäle versetzen den Kernstrom 49 und somit auch den Mantelstrom 50 in eine hohe Rotations-Strömungsgeschwindigkeit. Außerdem verhindern sie aufgrund ihrer schrägen Orientierung bezüglich der Längsachse 2 Rückströmungen.

Wie bei den bereits beschriebenen Ausführungsbeispielen werden der Kernstrom 49 und der Mantelstrom 50 durch den Hilfsgasstrom 25 abgelenkt und beschleunigt. Durch die in diesem dritten Ausführungsbeispiel beschriebene Ausgestaltung der Filtervorrichtung wird eine erhöhte Abscheiderate im Vergleich zu den ersten beiden Ausführungsbeispielen der Filtervorrichtung erzielt. Dies wird durch die besonders hohe Rotationsgeschwindigkeit des Gasstroms 26 in dem Filter-Hauptteil 1 erreicht. Die Gas-Führungs-Schnecke 43, die Gas-Austritts-Kanäle und die Hilfsgasstrom-Eintrittsleitungen 5 sind derart ausgebildet, dass die Rotationsgeschwindigkeit des Gasstromes 24 bzw. 26 stets erhöht wird.

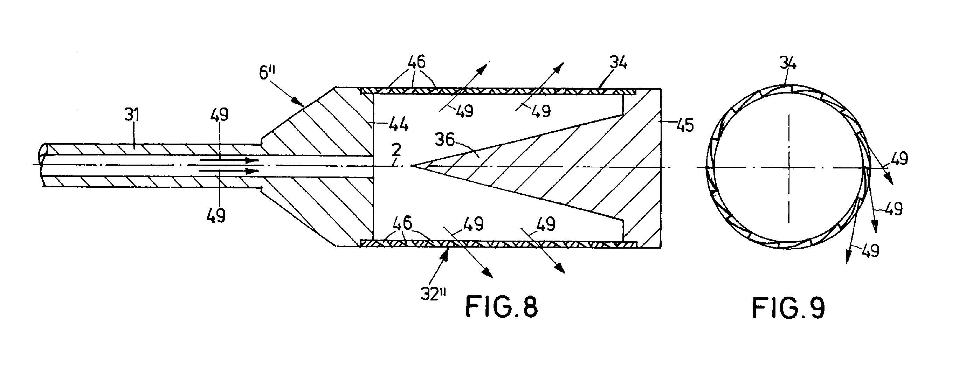

Nachfolgend wird unter Bezugnahme auf die Figuren 8 und 9 eine weitere Ausführungsform eines Füllkörpers der Erfindung beschrieben. Identische Teile erhalten dieselben Bezugszeichen wie bei dem Ausführungsbeispiel gemäß Figur 7, auf dessen Beschreibung hiermit verwiesen wird. Konstruktiv unterschiedliche, jedoch funktionell gleichartige Teile erhalten dieselben Bezugszeichen mit zwei hochgesetzten Strichen. Der Füllkörper 6" umfasst eine rohrförmig ausgebildete Gas-Einführleitung 31 sowie einen Gas-Austrittsabschnitt 32". Mit der Gas-Einführleitung 31 ist ein gegenüber der Außenfläche der Gas-Einführleitung 31 radial vorspringender, umlaufender Steg 44 verbunden, der eine schräg verlaufende Stirnfläche aufweist. Der Gas-Austrittsabschnitt 32" wird sowohl durch den Steg 44 als auch durch eine Abschlussplatte 45 axial begrenzt. Zwischen dem Steg 44 und der Abschlussplatte 45 ist eine perforierte Blechhülse 34 angeordnet. Von der Abschlussplatte 45 erstreckt sich ein Gas-Verdrängungskörper 36 in Richtung auf den Steg 44. Die Blechhülse 34 ist mit zahlreichen Gas-Austritts-Kanälen 46 versehen. Die bei dem Füllkörper 6' eingesetzte Blechhülse 43 entspricht in ihrer Ausgestaltung der in Figur 7 dargestellten Blechhülse. Die Gas-Austritts-Kanäle 46 verlaufen schräg zu der Längsachse 2 und verjüngen sich.

Der Kernstrom 49 eines zu reinigenden Gasstroms 24 wird über die Gas-Einführleitung 31 in den Gas-Austrittsabschnitt 32" geleitet. Der Übergang von der Gas-Einführleitung 31 zu dem Gas-Austrittsabschnitt 32" ist stufenartig ausgebildet. Durch die Gas-Austritts-Kanäle 46 wird der Kernstrom 49 in den Strömungskanal 48 geführt und in eine schraubenförmige Strömungs-Bahn versetzt. Der aus dem Gas-Austrittsabschnitt 32" austretende Kernstrom 49 weist beim Austritt sowohl eine radiale als auch eine axiale Strömungsrichtungs-Komponente auf. Durch den Kernstrom 49 wird der bereits in Drall versetzte Mantelstrom 50 im Strömungskanal 48 sowohl in Gas-Strömungsrichtung 4 und in Rotationsrichtung beschleunigt.

## Patentansprüche

1. Filtervorrichtung zum Abscheiden von Flüssigkeiten, Feststoffen und/oder Gasen mit anderem spezifischen Gewicht aus einem Gasstrom (24) umfassend
- ein im wesentlichen rohrförmiges Filter-Hauptteil (1) mit
- einem axialen Gas-Eintrittsanschluss (3),
- tangential in das Filter-Hauptteil (1) mündenden Hilfsgasstrom-Eintrittsleitungen (5), und
- einen in das Filter-Hauptteil (1) von der dem Gas-Eintrittsanschluss (3) abgewandten Seite her hineinragenden, zentralen Füllkörper (6), der einen Gas-Austrittsanschluss (7) für das gereinigte Gas aufweist,
**dadurch gekennzeichnet, dass** das Filter-Hauptteil (1) mehrere, einzelne Ringabschnitte (8) mit von Abschnitt zu Abschnitt in Gas-Strömungsrichtung (4) ansteigenden Innen-Durchmessern unter Ausbildung von Stufen (11) zur Verhinderung von Rückströmungen aufweist.

2. Filtervorrichtung nach Anspruch 1, **dadurch gekennzeichnet, dass** die Ringabschnitte als zylindrische Ring-Körper (8) ausgebildet sind.

3. Filtervorrichtung nach Anspruch 2, **dadurch gekennzeichnet, dass** mindestens einer der Ring-Körper (8) Nuten (12) in mindestens einer seiner Stirnseiten (13) zur Ausbildung der Hilfsgasstrom-Eintrittsleitungen (5) aufweist.

4. Filtervorrichtung nach einem der Ansprüche 2 bis 3, **dadurch gekennzeichnet, dass** jeder der Ring-Körper (8) mindestens zwei Nuten (12) aufweist.

5. Filtervorrichtung nach einem der Ansprüche 1 bis 4, **dadurch gekennzeichnet, dass** die Hilfsgasstrom-Eintrittsleitungen (5) zu der Längsachse (2) des Filter-Hauptteils (1) in Gas-Strömungsrichtung (4) schräg angeordnet sind.

6. Filtervorrichtung nach Anspruch 5, **dadurch gekennzeichnet, dass** der Winkel (W1, W2, W3) der Schrägstellung der Hilfsgasstrom-Eintrittsleitungen (5) in den Ring-Körpern (8) in Gas-Strömungsrichtung (4) zunimmt.

7. Filtervorrichtung nach einem der Ansprüche 2 bis 6, **dadurch gekennzeichnet, dass** die Hilfsgasstrom-Eintrittsleitungen (5) der montierten Ring-Körper (8) in der Filtervorrichtung zueinander versetzt angeordnet sind.

8. Filtervorrichtung nach einem der Ansprüche 1 bis 7, **dadurch gekennzeichnet, dass** die Filtervorrichtung eine das Filter-Hauptteil (1) umgebende Verteiler-Hülse (14) zur Hilfsgas-Einleitung aufweist.

9. Filtervorrichtung nach Anspruch 1, **dadurch gekennzeichnet, dass** der Füllkörper (6) einen kegelförmigen Kopfabschnitt (17) und einen Rumpf-Abschnitt (18) umfasst.

10. Filtervorrichtung nach Anspruch 9, **dadurch gekennzeichnet, dass** der Kopfabschnitt (17) und der Rumpf-Abschnitt (18) voneinander beabstandet, koaxial miteinander verbunden sind.

11. Filtervorrichtung nach Anspruch 9, **dadurch gekennzeichnet, dass** der Rumpf-Abschnitt (18) zu dem Gas-Austrittsanschluss (7) orientierte Leitlamellen (20) umfasst.

12. Filtervorrichtung nach Anspruch 11, **dadurch gekennzeichnet, dass** die Leitlamellen (20) durch Haltestifte (19) zwischen dem Kopfabschnitt (17) und dem Rumpf-Abschnitt (18) angeordnet sind.

13. Filtervorrichtung nach einem der Ansprüche 1 bis 12, **dadurch gekennzeichnet, dass** das Filter-Hauptteil (1) einen zusätzlichen Gas-Schälspalt (28) zwischen Gas-Eintritts- und -Austrittsanschluss (3, 7) aufweist.

14. Filtervorrichtung nach Anspruch 13, **dadurch gekennzeichnet, dass** der Gas-Schälspalt (28) zwischen zwei benachbarten Ring-Körpern (8) vorgesehen ist.

15. Filtervorrichtung nach Anspruch 13 oder 14, **dadurch gekennzeichnet, dass** die Spaltweite des Gas-Schälspalts (28) veränderbar ist.

16. Filtervorrichtung nach einem der Ansprüche 13 bis 15, **dadurch gekennzeichnet, dass** eine Sammel-Hülse (29) mit einer Gas-Abführleitung (30) über dem Gas-Schälspalt (28) angeordnet ist.

17. Filtervorrichtung nach einem der Ansprüche 1 bis 16, **dadurch gekennzeichnet, dass** der Füllkörper (6'; 6") eine Gas-Einführleitung (31) und einen Gas-Austrittsabschnitt (32; 32") umfasst.

18. Filtervorrichtung nach Anspruch 17, **dadurch gekennzeichnet, dass** der Gas-Austrittsabschnitt (32; 32") eine perforierte Blechhülse (34) mit Gas-Austritts-Kanälen (46) zur Versetzung des Gasstroms (24) in eine schraubenförmige Strömungs-Bahn aufweist.

19. Filtervorrichtung nach einem der Ansprüche 1 bis 18, **dadurch gekennzeichnet, dass** stromaufwärts des Filter-Hauptteils (1) ein Schnecken-Rohr (42) mit einer Gas-Führungs-Schnecke (43) zur schraubenförmigen Zuführung des Gasstroms (24) in das Filter-Hauptteil (1) angeordnet ist.

20. Filtervorrichtung nach Anspruch 1, **dadurch gekennzeichnet, dass** die Strömungs-Oberfläche (10, 6) der Filtervorrichtung elektropoliert oder mit einer porenlosen, abriebfesten Gleitschicht versehen oder in polierter Keramik ausgeführt ist.
